# EUROPEAN PATENT APPLICATION

(11) **EP 4 748 591 A1**
(43) Date of publication of application: **27.05.2026**
(21) Application number: 25212582.8
(22) Date of filing: 31.10.2025
(51) Int. Cl.: B60C 19/00

(54) **PNEUMATIC TIRE**

(30) Priority: 22.11.2024 JP 2024204178
(71) Applicant: Sumitomo Rubber Industries, Ltd., Kobe-shi, Hyogo 651-0072 (JP)
(72) Inventor: Yukawa, Naoki, Kobe-shi, Hyogo, 651-0072 (JP); Matsunami, Sho, Kobe-shi, Hyogo, 651-0072 (JP); Sato, Takuya, Kobe-shi, Hyogo, 651-0072 (JP)
(74) Representative: Manitz Finsterwald Patent- und Rechtsanwaltspartnerschaft mbB

(57) **Abstract**

The present invention is directed to a pneumatic tire 1 in which a sound absorbing member 3 is removably attached to an inner surface 2a of a tread portion 2. The sound absorbing member 3 is formed into an annular shape by joining a body 4 made of a long sponge material. The body 4 has a joint surface 4c where a first end 4a on one side and a second end 4b on another side in a longitudinal direction thereof are joined. The joint surface 4c is inclined with respect to a tire radial direction. A length of an outer circumferential surface 3a of the sound absorbing member 3 is smaller than a length of the inner surface 2a of the tread portion 2.

## Description

### BACKGROUND OF THE INVENTION

### Field of the Invention

The present invention relates to a pneumatic tire in which a sound absorbing member is attached to an inner cavity surface.

### Background Art

Hitherto, a pneumatic tire in which a sound absorbing member is attached to the inner surface of a tread portion has been known. For example, Japanese Laid-Open Patent Publication No. 2024-069056 proposes a pneumatic tire that achieves both improved efficiency of puncture repair and noise performance by forming grooves on the outer circumferential surface of a sponge-like sound absorbing member firmly fixed to the inner surface of a tread portion.

However, even in the pneumatic tire disclosed in Japanese Laid-Open Patent Publication No. 2024-069056, when a puncture repair liquid is used, the puncture repair liquid may be partially absorbed by the sponge-like sound absorbing member, potentially causing a weight imbalance in the tire circumferential direction and leading to vibration during running. Therefore, even if the pneumatic tire, in which the sound absorbing member is firmly fixed, can be temporarily repaired to a runnable state through puncture repair using the puncture repair liquid, the pneumatic tire still needs to be replaced afterward.

The present invention has been made in view of the above circumstances, and a main object of the present invention is to provide a pneumatic tire that enables efficient puncture repair using a puncture repair liquid, eliminates the need for tire replacement after puncture repair, and can improve the durability of a sound absorbing member.

### SUMMARY OF THE INVENTION

The present invention is directed to a pneumatic tire in which a sound absorbing member is removably attached to an inner surface of a tread portion, wherein the sound absorbing member is formed into an annular shape by joining a body made of a long sponge material, the body has a joint surface where a first end on one side and a second end on another side in a longitudinal direction thereof are joined, the joint surface is inclined with respect to a tire radial direction, and a length of an outer circumferential surface of the sound absorbing member is smaller than a length of the inner surface of the tread portion.

By having the above-described configuration, the pneumatic tire according to the present invention enables efficient puncture repair using a puncture repair liquid, eliminates the need for tire replacement after puncture repair, and can improve the durability of the sound absorbing member.

### BRIEF DESCRIPTION OF THE DRAWINGS

FIG. 1 is a schematic cross-sectional view of a pneumatic tire according to one embodiment of the present invention;
FIG. 2 shows exploded schematic cross-sectional views of the pneumatic tire;
FIG. 3 is a schematic view of a tire meridian cross-section of the pneumatic tire;
FIG. 4 is a partially enlarged view of FIG. 1; and
FIG. 5 is a schematic view of a tread portion as seen from the inner surface side thereof.

### DETAILED DESCRIPTION

Hereinafter, one embodiment of the present invention will be described in detail with reference to the drawings.

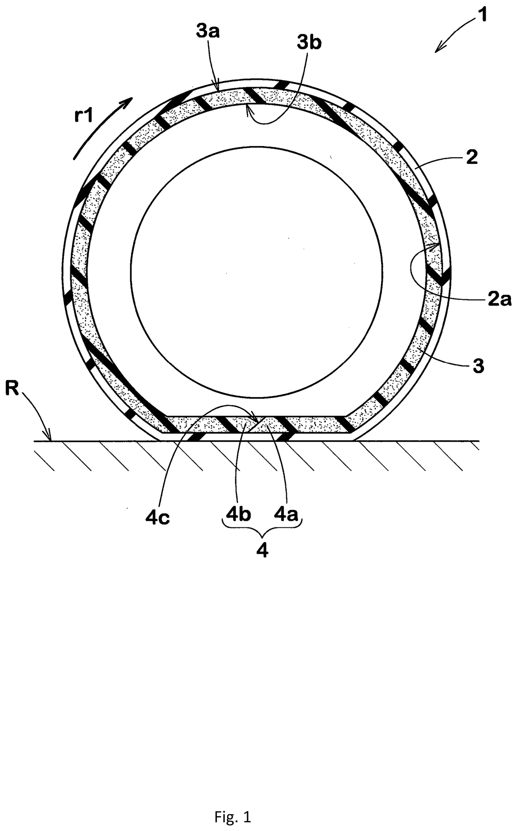

FIG. 1 is a schematic cross-sectional view orthogonal to the tire axial direction of a pneumatic tire 1 that is in contact with a road surface R according to the present embodiment. As shown in FIG. 1, in the pneumatic tire 1 according to the present embodiment, a sound absorbing member 3 is removably attached to an inner surface 2a of a tread portion 2.

That is, the sound absorbing member 3 according to the present embodiment is disposed on the inner surface 2a of the tread portion 2 without being firmly fixed. When performing puncture repair by using a puncture repair liquid, even if the puncture repair liquid is partially absorbed by such a sound absorbing member 3 and thus a weight imbalance in the tire circumferential direction occurs, only the sound absorbing member 3 needs to be replaced, so that the need for tire replacement after puncture repair is eliminated.

The pneumatic tire 1 is suitably used as, for example, a passenger car tire. The pneumatic tire 1 is not limited to such a mode. For example, the pneumatic tire 1 can be applied to a variety of tires including heavy duty tires, tires for small cargo vehicles, tires for off-road traveling, electric vehicle tires, and industrial machinery tires.

The sound absorbing member 3 according to the present embodiment is formed into an annular shape by joining a body 4 made of a long sponge material. Such a sound absorbing member 3 can have lower production costs than annularly molded members and also is easy to adapt to multiple sizes.

The body 4 preferably has a joint surface 4c where a first end 4a on one side and a second end 4b on the other side in the longitudinal direction thereof are joined. In the present embodiment, the joint surface 4c is inclined with respect to the tire radial direction. Such a joint surface 4c can ensure a large joint area and can disperse stress acting on the joint surface 4c at the time of being compressed and deformed, whereby the durability of the sound absorbing member 3 can be improved.

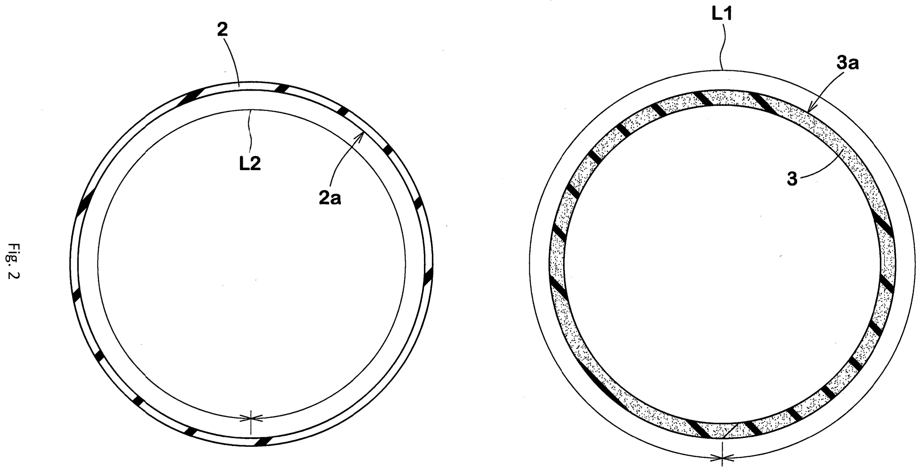

FIG. 2 shows exploded schematic cross-sectional views taken at a tire equator C of the pneumatic tire 1. As shown in FIG. 1 and FIG. 2, a length L1 of an outer circumferential surface 3a of the sound absorbing member 3 is preferably smaller than a length L2 of the inner surface 2a of the tread portion 2. The specific gravity of the body 4 made of a sponge material is less than the specific gravity of the puncture repair liquid, and such a sound absorbing member 3 has a dimensional leeway relative to the inner surface 2a of the tread portion 2, so that it is easy to make the body 4 float on the puncture repair liquid during puncture repair.

Accordingly, the pneumatic tire 1 according to the present embodiment allows the puncture repair liquid to smoothly move to a puncture area at the time of puncture repair using the puncture repair liquid, thus enabling efficient puncture repair. Consequently, the pneumatic tire 1 according to the present embodiment enables efficient puncture repair using the puncture repair liquid, eliminates the need for tire replacement after puncture repair, and can improve the durability of the sound absorbing member 3.

In a more preferable mode, the length L1 of the sound absorbing member 3 is 98% or less of the length L2 of the inner surface 2a of the tread portion 2. When the length L1 of the outer circumferential surface 3a of the sound absorbing member 3 is 98% or less of the length L2 of the inner surface 2a of the tread portion 2, it is possible to assuredly ensure a dimensional leeway relative to the inner surface 2a of the tread portion 2, thus contributing to efficient puncture repair using the puncture repair liquid. From such a viewpoint, the length L1 of the outer circumferential surface 3a of the sound absorbing member 3 is more preferably 97% or less and even more preferably 95% or less of the length L2 of the inner surface 2a of the tread portion 2.

The length L1 of the outer circumferential surface 3a of the sound absorbing member 3 is preferably 85% or more of the length L2 of the inner surface 2a of the tread portion 2. When the length L2 of the inner surface 2a of the tread portion 2 is 85% or more of the length L1 of the outer circumferential surface 3a of the sound absorbing member 3, friction between the outer circumferential surface 3a of the sound absorbing member 3 and the inner surface 2a of the tread portion 2 can be suppressed, and the durability of the sound absorbing member 3 can be improved. From such a viewpoint, the length L1 of the outer circumferential surface 3a of the sound absorbing member 3 is more preferably 88% or more and even more preferably 90% or more of the length L2 of the inner surface 2a of the tread portion 2.

Thus, the length L1 of the outer circumferential surface 3a of the sound absorbing member 3 is preferably 85% to 98% of the length L2 of the inner surface 2a, more preferably 88% to 97%, and even more preferably 90% to 95% of the tread portion 2. A combination of the upper limit value and the lower limit value in these numerical value ranges can be discretionarily selected.

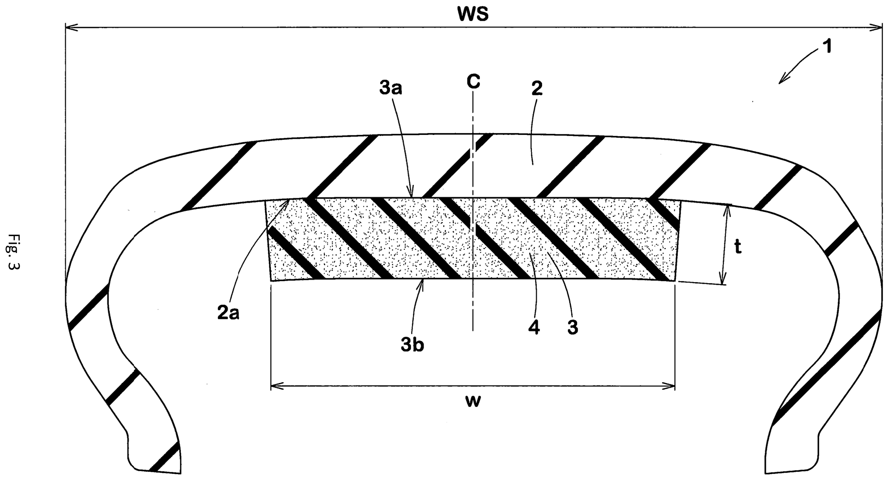

FIG. 3 is a schematic view of a tire meridian cross-section including the tire axis of the pneumatic tire 1. As shown in FIG. 1 and FIG. 3, the sound absorbing member 3 includes at least one body 4, and in the present embodiment, the sound absorbing member 3 includes one body 4. The sound absorbing member 3 is not limited to such a mode. For example, the sound absorbing member 3 may include a plurality of bodies 4 divided in the tire circumferential direction, or a plurality of bodies 4 aligned in the tire axial direction.

The body 4 has at least one joint surface 4c, and in the present embodiment, the body 4 has one joint surface 4c. The body 4 is not limited to such a mode. For example, a plurality of joint surfaces 4c may be provided in a plurality of bodies 4.

The cross-sectional shape of the body 4 is, for example, rectangular. Such a body 4 is easy to produce and can reduce production costs. The body 4 is not limited to such a mode. For example, the body 4 may have at least one groove (not shown) or a recess-projection structure on the outer circumferential surface 3a side or an inner circumferential surface 3b side of the sound absorbing member 3. The groove may extend in the tire circumferential direction, in the tire axial direction, or in a direction inclined with respect to the tire circumferential direction.

A maximum cross-sectional thickness t of the body 4 in the tire radial direction is preferably 10 mm or more. When the maximum cross-sectional thickness t of the body 4 is 10 mm or more, noise performance of the pneumatic tire 1 can be assuredly improved. From such a viewpoint, the maximum cross-sectional thickness t of the body 4 is more preferably 15 mm or more and even more preferably 20 mm or more.

The maximum cross-sectional thickness t of the body 4 in the tire radial direction is preferably 40 mm or less. When the maximum cross-sectional thickness t of the body 4 is 40 mm or less, excellent steering stability, ride comfort, and low fuel consumption performance of the pneumatic tire 1 can be maintained. From such a viewpoint, the maximum cross-sectional thickness t of the body 4 is more preferably 35 mm or less and even more preferably 30 mm or less.

Thus, the maximum cross-sectional thickness t of the body 4 in the tire radial direction is preferably 10 to 40 mm, more preferably 15 to 35 mm, and even more preferably 20 to 30 mm. A combination of the upper limit value and the lower limit value in these numerical value ranges can be discretionarily selected.

A maximum cross-sectional width w of the body 4 in the tire axial direction is preferably 20% or more of a maximum cross-sectional width WS of the pneumatic tire 1. When the maximum cross-sectional width w of the body 4 is 20% or more of the maximum cross-sectional width WS of the pneumatic tire 1, noise performance of the pneumatic tire 1 can be assuredly improved. From such a viewpoint, the maximum cross-sectional width w of the body 4 is more preferably 30% or more and even more preferably 40% or more of the maximum cross-sectional width WS of the pneumatic tire 1.

The maximum cross-sectional width w of the body 4 in the tire axial direction is preferably 80% or less of the maximum cross-sectional width WS of the pneumatic tire 1. When the maximum cross-sectional width w of the body 4 is 80% or less of the maximum cross-sectional width WS of the pneumatic tire 1, excellent steering stability, ride comfort, and low fuel consumption performance of the pneumatic tire 1 can be maintained. From such a viewpoint, the maximum cross-sectional width w of the body 4 is more preferably 70% or less and even more preferably 60% or less of the maximum cross-sectional width WS of the pneumatic tire 1.

Thus, the maximum cross-sectional width w of the body 4 in the tire axial direction is preferably 20% to 80%, more preferably 30% to 70%, and even more preferably 40% to 60% of the maximum cross-sectional width WS of the pneumatic tire 1. A combination of the upper limit value and the lower limit value in these numerical value ranges can be discretionarily selected.

In the body 4, for example, the first end 4a and the second end 4b are joined by an adhesive agent. Such a body 4 has a high adhesive strength at the joint surface 4c and thus can improve the durability of the sound absorbing member 3. In addition, such a body 4 is easy to produce and also has excellent cost performance.

In the body 4, for example, the first end 4a and the second end 4b may be joined through welding. In such a body 4, the puncture repair liquid moves smoothly on the joint surface 4c, thus enabling efficient puncture repair using the puncture repair liquid. In addition, such a body 4 has small weight variation at the joint surface 4c and has an excellent weight balance in the tire circumferential direction, whereby vibration during running can be suppressed.

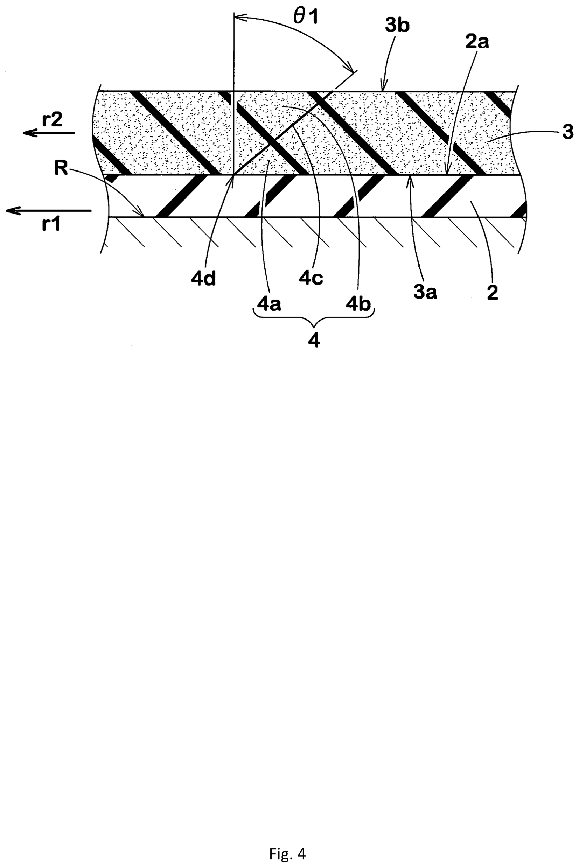

FIG. 4 is a partially enlarged view of FIG. 1. As shown in FIG. 4, an angle θ1 of the joint surface 4c with respect to the tire radial direction is preferably 5° or more. When the angle θ1 of the joint surface 4c with respect to the tire radial direction is 5° or more, stress at the time of being compressed and deformed can be assuredly dispersed. From such a viewpoint, the angle θ1 of the joint surface 4c with respect to the tire radial direction is more preferably 15° or more and even more preferably 30° or more.

The angle θ1 of the joint surface 4c with respect to the tire radial direction is preferably 60° or less. When the angle θ1 of the joint surface 4c with respect to the tire radial direction is 60° or less, an outer end 4d, in the tire radial direction, of the joint surface 4c does not make an excessively acute angle, and damage starting from the outer end 4d due to contact with the inner surface 2a of the pneumatic tire 1 can be suppressed. From such a viewpoint, the angle θ1 of the joint surface 4c with respect to the tire radial direction is more preferably 55° or less and even more preferably 50° or less.

Thus, the angle θ1 of the joint surface 4c with respect to the tire radial direction is preferably 5 to 60°, more preferably 15 to 55°, and even more preferably 30 to 50°. A combination of the upper limit value and the lower limit value in these numerical value ranges can be discretionarily selected.

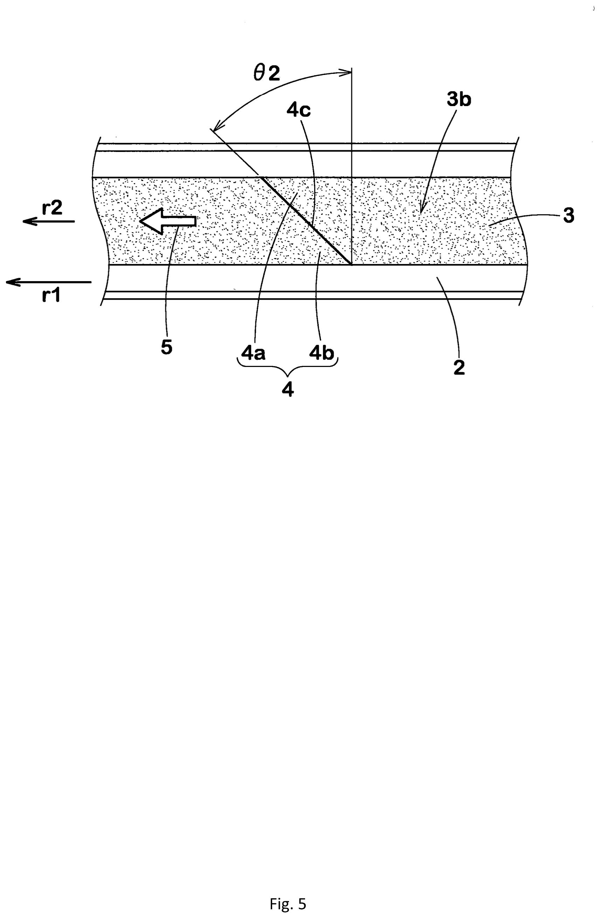

FIG. 5 is a schematic view of the tread portion 2 as seen from the inner surface 2a side thereof. As shown in FIG. 5, the joint surface 4c is inclined with respect to the tire axial direction, for example. Such a joint surface 4c can ensure a large joint area and can disperse stress acting on the body 4 in the longitudinal direction, whereby the durability of the sound absorbing member 3 can be improved.

An angle θ2 of the joint surface 4c with respect to the tire axial direction is preferably 5° or more. When the angle θ2 of the joint surface 4c with respect to the tire axial direction is 5° or more, stress acting on the body 4 in the longitudinal direction can be assuredly dispersed. From such a viewpoint, the angle θ2 of the joint surface 4c with respect to the tire axial direction is more preferably 15° or more and even more preferably 30° or more.

The angle θ2 of the joint surface 4c with respect to the tire axial direction is preferably 60° or less. When the angle θ2 of the joint surface 4c with respect to the tire axial direction is 60° or less, the joint surface 4c is suppressed from becoming excessively large, and production costs can be reduced.

Thus, the angle θ2 of the joint surface 4c with respect to the tire axial direction is preferably 5 to 60°, more preferably 15 to 55°, and even more preferably 30 to 50°. A combination of the upper limit value and the lower limit value in these numerical value ranges can be discretionarily selected.

As shown in FIG. 1 to FIG. 5, for the sound absorbing member 3 of the present embodiment, an attaching direction r2 with respect to a rotation direction r1 of the pneumatic tire 1 is designated. Such a sound absorbing member 3 can adopt a shape corresponding to an influence based on the rotation direction r1 of the pneumatic tire 1.

The sound absorbing member 3 of the present embodiment is attached such that the outer end 4d, in the tire radial direction, of the joint surface 4c is positioned on the leading edge side. Damage starting from the outer end 4d of the joint surface 4c is suppressed in such a sound absorbing member 3 even if a difference between the rotation speed of the pneumatic tire 1 and the rotation speed of the sound absorbing member 3 is generated, whereby the durability of the sound absorbing member 3 can be improved.

The sound absorbing member 3 preferably has an indication portion 5 indicating the attaching direction r2 on the inner circumferential surface 3b. The indication portion 5 of the present embodiment is represented by an arrow indicating the attaching direction r2. Such a sound absorbing member 3 has excellent visibility, whereby attaching mistakes can be suppressed. The indication portion 5 is not limited to such a mode. For example, an arrow may be drawn together with text saying, "tire rotation direction" or "there is directionality".

Although the particularly preferred embodiment of the present invention has been described in detail above, the present invention is not limited to the above-described embodiment, and various modifications can be made to implement the present invention.

## Claims

1. A pneumatic tire (1) in which a sound absorbing member (3) is removably attached to an inner surface (2a) of a tread portion (2), wherein
the sound absorbing member (3) is formed into an annular shape by joining a body (4) made of a long sponge material,
the body (4) has a joint surface (4c) where a first end (4a) on one side and a second end (4b) on another side in a longitudinal direction thereof are joined,
the joint surface (4c) is inclined with respect to a tire radial direction, and
a length (L1) of an outer circumferential surface (3a) of the sound absorbing member (3) is smaller than a length (L2) of the inner surface (2a) of the tread portion (2).

2. The pneumatic tire (1) according to claim 1, wherein the length (L1) of the outer circumferential surface (3a) of the sound absorbing member (3) is 98% or less of the length (L2) of the inner surface (2a) of the tread portion (2).

3. The pneumatic tire (1) according to claim 1 or 2, wherein an angle (θ1) of the joint surface (4c) with respect to the tire radial direction is 5 to 60°.

4. The pneumatic tire (1) according to any one of claims 1 to 3, wherein the joint surface (4c) is inclined with respect to a tire axial direction.

5. The pneumatic tire (1) according to claim 4, wherein an angle (θ2) of the joint surface (4c) with respect to the tire axial direction is 5 to 60°.

6. The pneumatic tire (1) according to any one of claims 1 to 5, wherein, in the body (4), the first end (4a) and the second end (4b) are joined by an adhesive agent.

7. The pneumatic tire (1) according to any one of claims 1 to 5, wherein, in the body (4), the first end (4a) and the second end (4b) are joined through welding.

8. The pneumatic tire (1) according to any one of claims 1 to 7, wherein, for the sound absorbing member (3), an attaching direction (r2) with respect to a rotation direction (r1) of the pneumatic tire (1) is designated.

9. The pneumatic tire (1) according to claim 8, wherein the sound absorbing member (3) is attached such that an outer end (4d), in the tire radial direction, of the joint surface (4c) is positioned on a leading edge side.

10. The pneumatic tire (1) according to claim 8 or 9, wherein the sound absorbing member (3) has an indication portion (5) indicating the attaching direction (r2) on an inner circumferential surface (3b).
